# EUROPEAN PATENT SPECIFICATION

(11) **EP 3 541 248 B1**
(45) Date of publication and mention of the grant of the patent: **06.10.2021**
(21) Application number: 13826580.6
(22) Date of filing: 19.12.2013
(51) Int. Cl.: A47F 3/04

(54) **FRUITS AND VEGETABLES REFRIGERATOR JUICER**
KÜHLTHEKE-ENTSAFTER FÜR OBST UND GEMÜSE
RÉFRIGÉRATEUR-CENTRIFUGEUSE POUR FRUITS ET LÉGUMES

(30) Priority: 22.01.2013 GR 20130100032
(43) Date of publication of application: 25.09.2019
(73) Proprietor: Giannopoulos, Nikolaos, 17562 P. Faliro Attikis (GR)
(72) Inventor: Giannopoulos, Nikolaos, 17562 P. Faliro Attikis (GR)
(86) International application number: PCT/GR2013/000067
(87) International publication number: WO 2014/114960

(56) References cited:
- US-A1- 2008 028 943
- Oranfresh AAT: "Orange juice for everyone: Oranfresh Healthy Vending Machines", Youtube, 11 November 2011 (2011-11-11), page 1 pp., XP054981018, Retrieved from the Internet: URL:https://www.youtube.com/watch?v=45zjx1 l7sPA [retrieved on 2020-10-20]

## Description

The invention relates to the fruits and vegetables refrigerator juicer, which is used for the maintenance and production of natural fruits and vegetables juices.

The fruits and vegetables refrigerator juicer and its juice extractors are used widely for both home and professional maintenance and production of natural juice. Until today, the maintenance area of the raw material (fruits and vegetables) for the production of juices and the juicing device were these different devices.

The document US 2008/028943 A1 discloses a fruit juice vending machine. The document XP054981018 (Oranfresh AAT: "Orange juice for everyone: Oranfresh Healthy Vending Machines", URL:https://www.youtube.com/watch?v=45zjx1l7sPA) discloses an orange juice vending machine.

The present invention relates to a maintenance refrigerator and fruits and vegetables juicer embedded in a device, which includes window display that lists the raw material, meaning fruits and vegetables, juicer which prepares/produces the natural juices and concludes by having the juice (from the juicers) pour directly to the glass which is located in front of the showcase. The fruits and vegetables refrigerator juicer may have a round shape, triangle, square and horizontal, depending on customer needs or request.

In accordance with this invention, this is achieved thanks to a tube, manufactured with a material approved for food, placed at an angle, which leads the product from the juicer directly into the glass, without the intervention of any third party. Once the consumer receives his/her juice, then the process of rinsing the juicer and rack of which the glasses are placed is followed.

The incorporation of the maintenance of the refrigerator and juicer, the direct injection of the final product into the glass and the automatic rinsing all the parts that come into contact with the product automates the preparation of the juice without the interference of human factors in any of the above procedures and in this way, it is possible to produce large numbers of different juices in a very short timeframe.

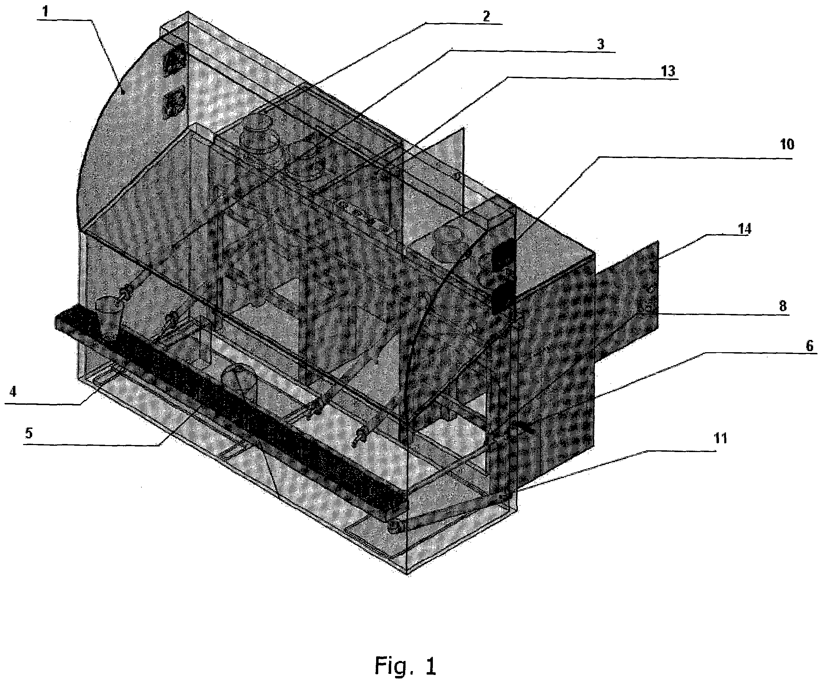

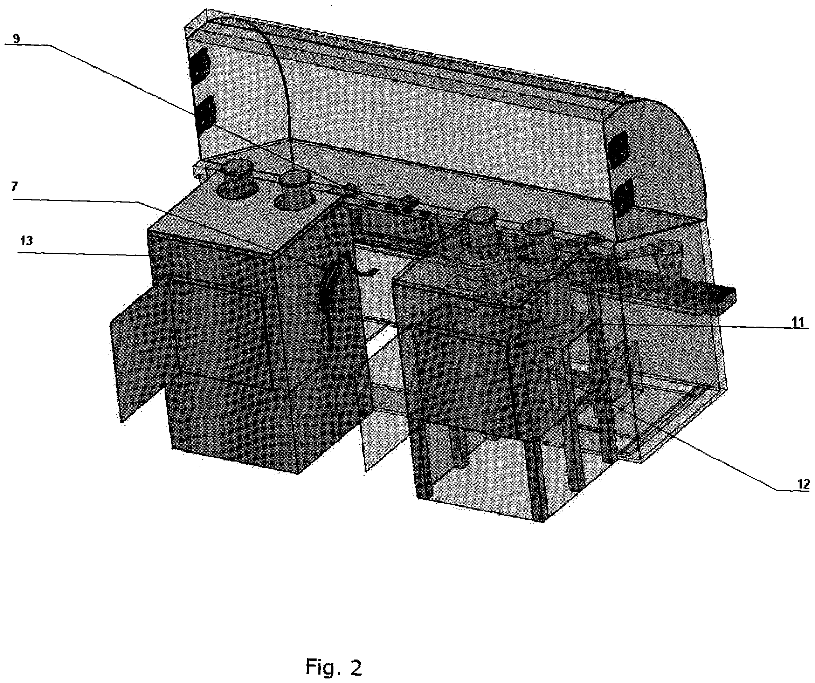

Figure 1 shows a perspective view of the invention, and Figure 2 shows the back side of the invention. The fruits and vegetables refrigerator juicer consists of a refrigerated display case (1) the purpose of which is the promotion and preservation of fruits and vegetables from which the juice is produced, located in the back side where there are the juice extractors (2), which are centrifugal in order to separate the juice from the trash, where in its base there is an existing sewer pipe of water purification (11), and from the middle of the juicers starts a servicing juice tube (3) at the end of which, for there plastic clips and nozzles (4) and ends up at the front of the showcase of the refrigerator, where a grill rack is found (5), on top where the glass is located/situated in order for the juice to end up/arrive at.

On the back of the fruits and vegetables refrigerator juicer there is a controller (9) which consists of a pair of keyboard buttons (on/off) for the activation and termination of operating each juicer (2) and a pair of activation keys (on/off) of the electric valve (8), which is used for the rinsing of the grill rack (5) and connected to a water supply (6) for rinsing of all the points that come into contact with the final product, the juice.

The operator places the fruit which has been selected by the window in the juicer (2) and after pressing the operation initiator, this produces the juice that through the servicing juice tube (3) result in the glass in front of the showrooms. Then the same operator activates the solenoid (8) which cleans the grill.

In opening the showcase, there are fans (10) for the prevention of any flying bug entering the showcase during the process of juice preparation of fruits & vegetables.

Located at the rear of the fruits and vegetables refrigerator juicer there are benches/boxes (12) where the juicers and collection container pulp residues are located (13), whereby the pulp residues end up. The benches/boxes are covered with "special covers" (14) where pulp residues exporting from the containers takes place. A handgun is available between the benches/boxes of the juicers and the collection container pulp residue (7) used to rinse the juicers and the tube where the juice flows into the glasses/cups.

The above mentioned plans display four juicers, but this does not prevent the use of more juicers.

## Claims

1. A fruits and vegetables refrigerator juicer being **characterized in that** it comprises a refrigerated display case (1) the purpose of which is the promotion and preservation of fruits and vegetables to be selected from which the juice is produced, wherein on a back side of the refrigerated display case (1) the fruits and vegetables refrigerator juicer incorporates juice extractors (2) in which an operator can put the selected fruits, the juice extractors (2) being centrifugal in order to separate the juice from the pulp residue, and wherein the fruits and vegetables refrigerator juicer comprises a servicing juice tube (3) through which the juice is obtained, the servicing juice tube (3) ending up at the front of the refrigerated display case (1) leading the juice from the juice extractors (2) directly into a glass.

2. The fruits and vegetables refrigerator juicer according to claim 1, further comprising a servicing grill rack (5) provided on a front side of the refrigerated display case (1), the glass being located on the servicing grill rack (5).

3. The fruits and vegetables refrigerator juicer according to claim 2, comprising an electric valve (8) being connected to a water supply (6) for rinsing the servicing grill rack and all the points that come into contact with the juice.

4. The fruits and vegetables refrigerator juicer according to claim 3, comprising a controller (9) consisting of a pair of keyboard buttons (on/ off) for the activation and termination of operating each juice extractor (2) and a pair of activation keys (on/off) of the electric valve (8).

5. The fruits and vegetables refrigerator juicer according to claim 3, wherein it further comprises a handgun (7) to clean the juice extractor (2) and the servicing juice tube (3), wherein the handgun (7) receives water from the water supply (6) which is separated into two networks in which one ends up in the electric valve (8) and the other in the handgun (7).

6. The fruits and vegetables refrigerator juicer according to anyone of the preceding claims, further comprising a drain line (11), wherein all water after washing all parties lead to the drain line (11).

7. The fruits and vegetables refrigerator juicer according to anyone of the preceding claims, further comprising containers (13) of pulp residues, wherein the juice extractors (2) and containers (13) of pulp residues are in special benches or boxes (12), in the rear of the fruits and vegetables refrigerator juicer, with covers (14) comprising exhaust ports.

8. The fruits and vegetables refrigerator juicer according to anyone of the preceding claims, wherein the refrigerated display case (1) has a round, triangle, square or horizontal shape.

9. The fruits and vegetables refrigerator juicer according to anyone of the preceding claims, wherein the refrigerated display case (1) comprises fans (10) to prevent flying bugs from entering inside the refrigerated display case (1) in an opening of the refrigerated display case (1).

10. The fruits and vegetables refrigerator juicer according to anyone of the preceding claims, wherein the servicing juice tube (3) is made with material approved for food use.

11. The fruits and vegetables refrigerator juicer according to anyone of the preceding claims, wherein the servicing juice tube (3) is placed at an angle.

## Patentansprüche

1. Kühltheke-Entsafter für Obst und Gemüse, wird **dadurch gekennzeichnet daß** er eine Kühlvitrine (1) enthält, deren Zweck die Vorführung und die Erhaltung von Obst und Gemüse ist, und von den ausgewählten der Saft produziert wird, wo an der hinteren Seite der Kühlvitrine (1) der Kühltheke-Entsafter für Obst und Gemüse Saft-Extraktoren (2) enthält, wo auf denen ein Bediener die ausgewählte Obste stellen kann, die Saft-Extraktoren (2) zentrifugalkräftig sind, um den Saft von der Pulparest zu trennen und wobei der Kühltheke-Entsafter für Obst und Gemüse eine Saftservice-Tube (3) enthält, wo durch diese der Saft eingenommen wird, die Saftservice-Tube (3) an einer vorderen Seite der Kühlvitrine (1) endet, indem der Saft von den Saft-Extraktoren (2) direkt in einem Trinkglas geführt wird.

2. Kühltheke-Entsafter für Obst und Gemüse nach Anspruch 1, wo dazu einen Service-Grill (5) enthält, welcher an der vorderen Seite der Kühlvitrine (1) vorgesehen wird, wo das Trinkglas auf den Service-Grill (5) gestellt wird.

3. Kühltheke-Entsafter für Obst und Gemüse nach Anspruch 2, der ein elektrisches Ventil (8) enthält, das sich mit einer Wasserversorgung (6) verbindet, um den Service-Grill und allen Punkten, die in Kontakt mit dem Saft kommen, auszuspülen.

4. Kühltheke-Entsafter für Obst und Gemüse nach Anspruch 3, der einen Bediener (9) enthält, der aus einem Tastaturtastenpaar (on/off) , das für die Aktivierung und die Beendigung des Betriebes von jeder Saft-Extraktor (2) bestimmt ist und aus einem Aktivierungsschlüsselpaar (on/off) eines elektrischen Ventiles (8) besteht.

5. Kühltheke-Entsafter für Obst und Gemüse nach Anspruch 3, wo dazu eine Hand-Pistole (7) für die Reinigung des Saft-Extraktors (2) und der Saftservice-Tube (3) enthält, wo die Hand-Pistole (7) Wasser von der Wasserversorgung (6) aufnimmt, welche in zwei Netzwerken geteilt wird, wo sich das eine an einem elektrischen Ventil (8) und das andere an der Hand-Pistole (7) enden.

6. Kühltheke-Entsafter für Obst und Gemüse nach irgendwelchem von den vorherigen Ansprüchen , welcher dazu eine Abflußleitung (11) enthält, wo alle Gewässer nachdem alle Teile ausgespült sind zu der Abflußleitung (11) geführt werden.

7. Kühltheke-Entsafter für Obst und Gemüse nach irgendwelchem von den vorherigen Ansprüchen, welcher dazu Pulparest-Behälter (13) enthält, wo sich die Saft-Extraktoren (2) und die Pulparest-Behälter (13) sich in speziellen Bänken oder Kisten (12) an der hinteren Seite der Kühltheke-Entsaftern für Obst und Gemüse befinden mit Abdeckungen (14), die Ausfuhr-Öffnungen enthalten.

8. Kühltheke-Entsafter für Obst und Gemüse nach irgendwelchem von den vorherigen Ansprüchen, wo die Kühlvitrine (1) eine runde, dreieckige, quadratische oder horizontale Form hat.

9. Kühltheke-Entsafter für Obst und Gemüse nach irgendwelchem von den vorherigen Ansprüchen, wo die Kühlvitrine (1) Ventilatoren (10) enthält, um das Eindringen von fliegenden Insekten im inneren der Kühlvitrine (1) während einer Öffnung der Kühlvitrine (1) zu verhindern.

10. Kühltheke-Entsafter für Obst und Gemüse nach irgendwelchem von den vorherigen Ansprüchen, wo die Saftservice-Tube (3) aus zugelassenem Material für die Verwendung in Nahrungsmitteln konstruiert ist.

11. Kühltheke-Entsafter für Obst und Gemüse nach irgendwelchem von den vorherigen Ansprüchen, wo die Saftservice-Tube (3) schräg gestellt wird.

## Revendications

1. Réfrigérateur-centrifugeuse pour fruits et légumes, **caractérisé en ce qu'**il comprend un présentoir réfrigéré (1) dont le but est la promotion et la conservation des fruits et légumes, sélectionnés à partir desquels est produit le jus, où sur la partie arrière du présentoir réfrigéré (1) le réfrigérateur-centrifugeuse pour fruits et légumes comprend des extracteurs de jus (2) dans lesquels un dispositif opérationnel peut mettre les fruits sélectionnés, où les extracteurs de jus (2) sont des centrifuges afin de séparer le jus du résidu de pulpe, et où le réfrigérateur-centrifugeuse pour fruits et légumes comprend un tube de service du jus (3) à travers lequel est obtenu le jus, où le tube de service du jus (3) se termine sur la partie avant du présentoir réfrigéré (1) conduisant le jus depuis les extracteurs de jus (2) directement dans un verre.

2. Réfrigérateur-centrifugeuse pour fruits et légumes selon la revendication 1, lequel comprend en outre une grille de service (5), laquelle est prévue sur la partie avant du présentoir réfrigéré (1), où le verre est placé sur la grille de service (5).

3. Réfrigérateur-centrifugeuse pour fruits et légumes selon la revendication 2, lequel comprend une électrovanne (8) reliée à une alimentation en eau (6) pour le rinçage de la grille de service et de tous les points qui entrent en contact avec le jus.

4. Réfrigérateur-centrifugeuse pour fruits et légumes selon la revendication 3, lequel comprend un dispositif de contrôle (9) constitué d'une paire de boutons de clavier (marche/arrêt) pour l'activation et l'arrêt de fonctionnement de chaque extracteur de jus (2) et une paire de touches d'activation (marche/arrêt) de l'électrovanne (8).

5. Réfrigérateur à jus de fruits et légumes selon la revendication 3, **caractérisé en ce qu'**il comprend en outre un pistolet manuel (7) pour le nettoyage de l'extracteur de jus (2) et du tube de service du jus (3), où le pistolet manuel (7) reçoit l'eau à partir de l'alimentation en eau (6), laquelle est séparée en deux réseaux dans lesquels l'un aboutit dans l'électrovanne (8) et l'autre dans le pistolet manuel (7).

6. Réfrigérateur-centrifugeuse pour fruits et légumes selon n'importe laquelle des revendications précédentes, lequel comprend en outre un tuyau de drainage (11), où toutes les eaux après lavage de toutes les parties sont conduites dans le tuyau de drainage (11).

7. Réfrigérateur-centrifugeuse pour fruits et légumes selon n'importe laquelle des revendications précédentes, lequel comprend en outre des récipients (13) de résidus de pulpe, où les extracteurs de jus (2) et les récipients (13) de résidus de pulpe se trouvent dans des bacs ou des boîtes spécifiques (12), sur la partie arrière du réfrigérateur-centrifugeuse pour fruits et légumes, munis de couvercles (14) lesquels comportent des orifices d'évacuation.

8. Réfrigérateur-centrifugeuse pour fruits et légumes selon n'importe laquelle des revendications précédentes, où le présentoir réfrigéré (1) a une forme arrondie, triangulaire, carrée ou horizontale.

9. Réfrigérateur-centrifugeuse pour fruits et légumes selon n'importe laquelle des revendications précédentes, où le présentoir réfrigéré (1) comprend des ventilateurs (10) afin d'empêcher les insectes volants d'entrer à l'intérieur du présentoir réfrigéré (1) par une ouverture du présentoir réfrigéré (1).

10. Réfrigérateur-centrifugeuse pour fruits et légumes selon n'importe laquelle des revendications précédentes, où le tube de service du jus (3) est réalisé à partir d'un matériau agréé dans le domaine de l'alimentation.

11. Réfrigérateur-centrifugeuse pour fruits et légumes selon n'importe laquelle des revendications précédentes, où le tube de service du jus (3) est placé sous un angle.
